# EUROPEAN PATENT SPECIFICATION

(11) **EP 3 708 398 B1**
(45) Date of publication and mention of the grant of the patent: **28.09.2022**
(21) Application number: 19475502.1
(22) Date of filing: 17.04.2019
(51) Int. Cl.: B60J 10/40, B61D 19/00

(54) **SEALING SYSTEM FOR WAGON SLIDING WALLS**
DICHTUNGSSYSTEM FÜR WAGENSCHIEBEWÄNDE
SYSTEME D'ÉTANCHÉITÉ POUR PAROIS COULISSANTES DE WAGONS

(30) Priority: 12.03.2019 SK 500202019 U
(43) Date of publication of application: 16.09.2020
(73) Proprietor: Tatravagónka, a.s., 058 01 Poprad (SK)
(72) Inventor: BENDÍK, Jaroslav, 05918 Spisské Bystré (SK)
(74) Representative: Belicka, Ivan

(56) References cited:
- DE-A1- 861 396
- DE-A1- 4 129 480
- GB-A- 2 127 079

## Description

### Field of technology

The technical solution relates to the sealing system of wagon sliding walls, mainly of railway wagons. The sealing system has a labyrinth design and it protects the wagon interior against penetration of dust and powder snow.

### State of the art

The current set of solutions for sliding wall sealing is focused mainly upon various designs of sealing stripes, labyrinths, rubber sealing, which require interruptions in the area of vertical and horizontal sealing connection (in corners) and also in the area of side wall underpass carriage. In the document RU2274569 (C2) publicized on 2006-04-20, there is described a solution, in which the bottom member of the door is isolated from the exterior by means of door sheathing and labyrinth sealing that consists of the bottom door bond and the vehicle frame guiding.

In the document CN207315130 (U) publicized on 2018-05-04, a solution for labyrinth fire-proof sealing of doors of mainly railway wagons is described.

In the document EP0900708 (A1) publicized on 1999-03-10, a solution for doors of railway wagons with increased resistance against overpressure is described. Doors for passengers for a railway coach have two sliding panels, whereby each panel has a reinforcing profile located in the vicinity of free ends. The profiles overlap most of the door height and they overlap at least 80% of door height. At their free ends, the door panels have elastic sealing, and they have curved surfaces facing each other in order to create two chambers as a labyrinth sealing with additional sealing edges.

GB 2 127 079 A shows a sealing system for the wagon sliding walls consisting of the bottom labyrinth construction and the upper labyrinth construction, where the bottom labyrinth construction consists of the first sealing plate attached to the sliding wall, where the first sealing plate (extremity of profile on which the sealing strip is attached) is directed towards the second sealing plate, which is attached to the horizontal firm part of the wagon; then the upper labyrinth construction consists of the extruded profile, which is attached to the sliding wall edge, which fit between a projection (and a wall) of the firm profile, which is attached to the firm part of the wagon.

### Nature of technical solution

Nature of technical solution according to the submitted utility design consists of the sealing system for sliding walls of wagons, mainly railway wagons. The wagon sliding wall sealing system consists of the bottom labyrinth construction and the upper labyrinth construction. The bottom labyrinth construction consists of the first sealing plate attached to the sliding wall. The first sealing plate is directed towards the second sealing plate, which is attached to the horizontal firm part of the wagon, where the end part of the horizontal firm part of the wagon is equipped with the third sealing plate directed towards the first sealing plate. The upper labyrinth construction consists of the extruded profile, which is attached to the sliding wall edge and which contains two projections, which fit between three projections of the firm profile, which is attached to the firm part of the wagon. The upper labyrinth construction creates a fluent transition of the extruded profiles in the corners of the sliding walls, which fit into the opposite located firm profiles on the firm part of the wagon, and thus they increase sealing properties of the wagon. An advantage of the submitted solution is a high resistance against penetration of dust and powder snow into the loading area of the wagon and a high resistance against penetration of water into the loading area of the wagon.

### Review of figures in the drawings

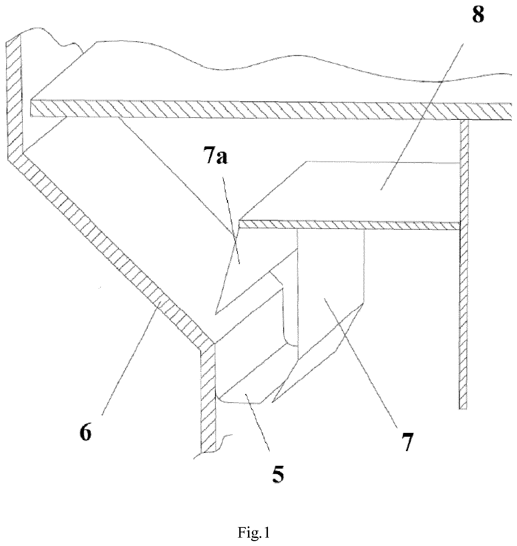

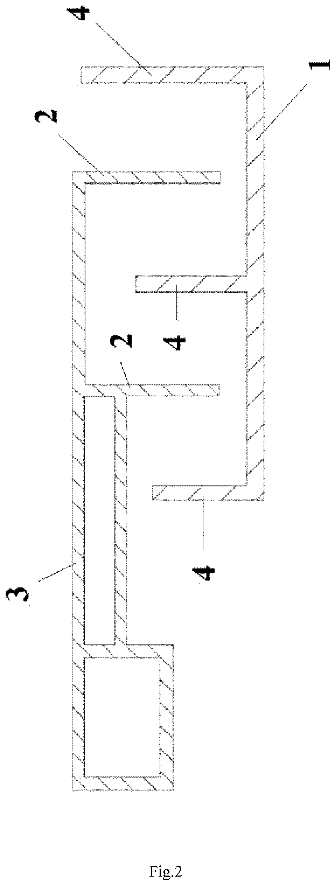

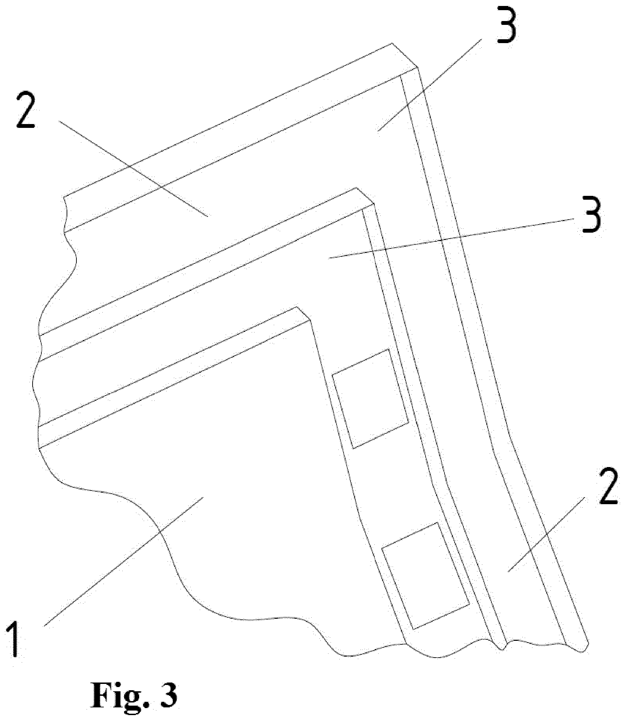

In the Fig.1, there is displayed a cut of the firm part of the wagon and the sliding wall with three sealing plates. In the Fig. 2, there is displayed a cut of the extruded profile and a cut of the firm profile in the position of closed sliding wall, In the Fig. 2, there is displayed in the corner.

### Examples of embodiment of the technical solution

The sealing system for the wagon sliding walls consists of the bottom labyrinth construction and the upper labyrinth construction. The bottom labyrinth construction consists of the first sealing plate 5 attached to the sliding wall 6. The first sealing plate 5 is directed towards the second sealing plate 7, which is attached to the horizontal firm part 8 of the wagon, where the end part of the horizontal firm part 8 of the wagon is equipped with the third sealing plate 7a directed towards the first sealing plate 5. The upper labyrinth construction consists of the extruded profile 3, which is attached to the sliding wall 6 edge and which contains two projections 2, which fit between three projections 4 of the firm profile 1, which is attached to the firm part 8 of the wagon. The upper labyrinth construction creates a fluent transition of the extruded profiles 3 in the corners of the sliding walls 6, which fit into the opposite located firm profiles 1 on the firm part 8 of the wagon, and thus they increase sealing properties of the wagon.

## Claims

1. sealing system for wagon sliding walls consisting of a bottom labyrinth construction and an upper labyrinth construction, where the bottom labyrinth construction consists of a first sealing plate (5) attached to the sliding wall (6), where the first sealing plate (5) is directed towards a second sealing plate (7), which is attached to a horizontal firm part (8) of the wagon, where an end part of the horizontal firm part (8) of the wagon is equipped with a third sealing plate (7a) directed towards the first sealing plate (5), then the upper labyrinth construction consists of an extruded profile (3), which is attached to the sliding wall (6) edge and which contains two projections (2), which fit between three projections (4) of a firm profile (1), which is attached to the firm part (8) of the wagon, whereby the upper labyrinth construction creates a fluent transition of the extruded profiles (3) in the corners of the sliding wall (6), which fit into the opposite located firm profiles (1) on the firm part (8) of the wagon for increasing sealing ability of the sliding wall (6) and the firm part (8) of the wagon.

## Patentansprüche

1. System zum Abdichten der Schiebewände des Waggons, **dadurch gekennzeichnet, dass** es durch eine untere Labyrinthstruktur und eine obere Labyrinthstruktur gebildet wird, wobei die untere Labyrinthstruktur durch die erste Dichtplatte (5) befestigte an der Schiebewand (6) gebildet wird, die auf die zweite Dichtplatte (7) gerichtet ist, die an dem horizontalen festen Teil (8) des Waggons befestigt ist, wobei das Endteil des horizontalen festen Teils (8) des Waggons ausgestattet ist mit einer der ersten Dichtplatte (5) zugewandten dritten Dichtplatte (7a), dann wird die obere Labyrinthstruktur durch ein Strangpressprofil (3) gebildet, das am Rand der Schiebewand (6) befestigt ist und zwei Vorsprünge ( 2), die zwischen die drei Vorsprünge (4) des festen Profils (1) passen, das auf dem festen Teil (8) des Wagens befestigt ist, während das obere Labyrinth der Konstruktion einen glatten Übergang von extrudierten Profilen (3) hinein die Ecken der Schiebewand (6) schafft, die in gegenüberliegende feste Profile (1) am festen Teil (8) des Waggons passen, um die Dichtfähigkeit der Schiebewand (6) zu erhöhen und des festen Teils (8) des Waggons.

## Revendications

1. Le système d'étanchéité des parois coulissantes du wagon, **caractérisé par le fait que** ce système est formé par construction labyrinthique inférieure et par construction labyrinthique supérieure, étant donné que la construction labyrinthique inférieure est formée par première feuille d'étanchéité en métal (5) fixée sur paroi coulissante (6) orientée vers la deuxième feuille d'étanchéité (7) qui est fixée sur la partie fixe horizontale (8) du wagon, où l'extrémité de la partie fixe horizontale (8) du wagon est équipée de la troisième feuille d'étanchéité (7a) en direction vers la première feuille d'étanchéité (5), et la construction supérieure labyrinthique est formée par profilé extrudé (3) fixé sur le bord de la paroi coulissante (6) et contient deux saillies (2) qui s'emboîtent entre trois saillies (4) du profilé fixe (1) fixé sur la partie fixe (8) du wagon, tandis que la construction labyrinthique supérieure crée un passage facie des profilés extrudés (3) dans les coins de la paroi coulissante (6) qui s'emboîtent dans des profilés fixes (1) opposés situés sur la partie fixe (8) du wagon afin d'augmenter la capacité d'étanchéité de la paroi coulissante (6) et de la partie fixe (8) du wagon.
